# EUROPÄISCHE PATENTANMELDUNG

(11) **EP 0 967 761 A1**
(43) Veröffentlichungstag der Anmeldung: **29.12.1999**
(21) Anmeldenummer: 98810582.1
(22) Anmeldetag: 24.06.1998
(51) Int. Cl.: H04L 25/06

(54) **Verfahren zum Übertragen von digitalen Daten über einen mit gebündelt auftretenden Störungen behafteten Übertragungskanal**

(71) Anmelder: Ascom Systec AG, 5506 Mägenwil (CH)
(72) Erfinder: Aldis, James, 5504 Othmarsingen (CH); Widmer, Hanspeter, 5507 Mellingen (CH); Dettmar, Uwe, 61440 Oberursel (DE)
(74) Vertreter: Roshardt, Werner Alfred, Dipl.-Phys.

(57) **Zusammenfassung**

Bei einem Verfahren zum Übertragen von digitalen Daten über einen mit gebündelt auftretenden Störungen behafteten Übertragungskanal 2 wird in einem Empfänger 3 nach einer Demodulation 7 eine soft-decision Decodierung 9 unter Berücksichtigung einer geschätzten Signalqualität durchgeführt. Zur Bestimmung der Signalqualität kann für eine vorgegebene Anzahl von empfangenen Symbolen geprüft werden, ob sie innerhalb eines vordefinierten Abstandes zu einem Konstellationspunkt liegen. Die Anzahl der innerhalb des vordefinierten Abstandes liegenden Symbole kann als Qualitätswert bei der nachfolgenden Decodierung verwendet werden. Auf diese Weise entsteht eine Kennlinie (16.1 bis 16.3) mit einem Buckel (17.1 bis 17.3). Symbole mit einem geringem Störgeräuschpegel werden im Verhältnis überbewertet, solche mit einem höheren Störgeräuschpegel werden dagegen relativ unterbewertet.

## Beschreibung

### Technisches Gebiet

Die Erfindung betrifft ein Verfahren zum Übertragen von digitalen Daten über einen mit gebündelt auftretenden Störungen behafteten Übertragungskanal, wobei in einem Empfänger nach einer Demodulation eine soft-decision Decodierung unter Berücksichtigung einer geschätzten Signalqualität durchgeführt wird. Ferner bezieht sich die Erfindung auf einen Empfängerschaltkreis zur Durchführung des Verfahrens.

### Stand der Technik

Die Liberalisierung der Telekommunikation führt dazu, dass nach Möglichkeiten gesucht wird, breitbandige Übertragungen über bestehende Leitungen und Medien zu realisieren, welche nicht primär für die Datenübertragung ausgelegt sind. Besonders interessant ist die Nutzung des Stromleitungsnetzwerkes, weil an diesem Netzwerk sozusagen alle Haushalte bereits angeschlossen sind. Mit anderen Worten: Das Übertragungsmedium ist vorhanden und muss nur noch in geeigneter Weise genutzt werden.

Das Problem der elektrischen Stromleitungen (engl. Power Line) besteht darin, dass starke impulsartige Störungen (welche typischerweise von Schaltvorgängen herrühren) vorhanden sind. Auch die sonstigen Störungen (Echos, Einkopplungen etc.) erschweren die Übertragung von breitbandigen Signalen. Stark varierende Störungen können auch bei Funkkanälen auftreten.

### Darstellung der Erfindung

Aufgabe der Erfindung ist es, ein Verfahren der eingangs genannten Art anzugeben, das eine verbesserte Detektion in Anwesenheit von impulsartigen bzw. gebündelten (engl. bursty) Störungen liefert.

Die Lösung der Aufgabe ist durch die Merkmale des Anspruchs 1 definiert. Gemäss der Erfindung wird die Schätzung der Empfangsqualität mit einer Schaltung durchgeführt, deren Charakteristik einen Buckel (bzw. S-Linien-Charakteristik) aufweist, welcher bei einem niedrigeren Verhältnis von Signal zu Rauschen eine Überbewertung bezogen auf eine lineare Charakteristik und bei einem höheren Verhältnis von Signal zu Rauschen eine relative Unterbewertung der Signalqualität erzeugt.

Bei impulsartigen Störungen wird auf diese Weise der Tatsache Rechnung getragen, dass der Störgeräuschpegel kurzzeitig stark ansteigen kann und dass dann die Zuverlässigkeit der Symbolschätzungen relativ gering ist. Im Prinzip werden die kurzen, stark fehlerbehafteten Signalabschnitte für die Decodierung selektiv als "schlecht" markiert.

Die Signalqualität bzw. das Verhältnis Signal zu Rauschen wird auf der Basis der Varianz des Störprozesses innerhalb eines vorgegebenen Fensters geschätzt. Gemäss einer bevorzugten Ausführungsform hat dieses Fenster eine Länge im Bereich der kürzesten zu erwartenden Störimpulse. Dadurch wird erreicht, dass die Schätzung der Signalqualität hinreichend schnell auf auftretende Störimpulsbündel reagiert.

Messungen zeigen, dass bei Stromversorgungsleitungen die auftretenden Störimpulse eine Länge im Bereich von einigen hundert Nanosekunden bis zu wenigen zehn Mikrosekunden heben. In dieser Störumgebung heben sich Fensterlängen von typischerweise weniger als 3 µs (z.B von 1 µs) als vorteilhaft erwiesen. Bei einer Symbolrate von z.B. 15 Ms/ s ist eine Fensterlänge von mindestens etwa N =15 optimal. Eine allzu geringe Länge verschlechtert die Zuverlässigkeit der Schätzung der Signalqualität. Umgekehrt wird bei einer Länge von beispielsweise N = 50 die Reaktion auf kurze Störimpulse ungenügend. Die Fensterlänge sollte deshalb im Bereich von N = 5 bis N = 25, insbesondere im Bereich von N = 5 bis N = 15 liegen.

Gemäss einer besonders bevorzugten Ausführungsform wird zur Bestimmung der Signalqualität für eine (entsprechend der Fensterlänge) vorgegebene Anzahl von empfangenden Symbolen geprüft, ob sie innerhalb eines vordefinierten Abstandes zu einem der vorhandenen Konstellationspunkten liegen. Die Anzahl der innerhalb des genannten Abstandes liegenden Symbole wird als Qualitätswert für die nachfolgende soft-decision Decodierung verwendet.

Die Wahl des als Schwellenwert verwendeten Abstandes hängt vorn Modulationsverfahren, von der Statistik der Störimpulse und im Einzelfall von weiteren Parametern ab. In einer ersten Näherung kann der Abstand so gewählt werden, dass bei einem Verhältnis von Signal zu Rauschen von mindestens etwa 5 dB statistisch gesehen die Mehrzahl der Symbole des jeweiligen Fensters innerhalb des vorgegebenen Abstandes zu einem Konstellationspunkt liegen. Versuche haben nämlich gezeigt, dass der Buckel der Charakteristik unterhalb etwa 5 dB liegen sollte. Infolgedessen werden Symbolschätzungen, welche bei etwa 0 dB oder weniger erfolgen, als "schlecht" qualifiziert. Umgekehrt kann bei einem Rauschabstand von mehr als 10 dB von einer zuverlässigen Symbolschätzung ausgegangen werden.

Für ein BPSK-Modulationsverfahren (BPSK= Binary Phase Shift Keying) ist ein Abstand von D = 0.5 besonders vorteilhaft. Insgesamt betrachtet lässt sich mit diesem Wert die beste System-Performance erreichen. Selbstverständlich sind andere Werte nicht grundsätzlich ungeeignet.

Die Implementation des erfindungsgemässen Verfahrens wirkt sich nur auf den Empfänger aus. Die Senderschaltungen können in an sich bekannter Weise ausgeführt sein.

Im Empfänger wird zwischen der Demodulationsstufe und der soft-decision Decodierung ein Modul eingeschoben, welches gemäss dem beschriebenen Verfahren die Symbolqualität schätzt. Der geschätzte Qualitätswert wird zusammen mit dem Symbolschätzwert in der nachfolgenden Decodierung zur Ermittlung des übertragenen Symbols verwendet. Ob das erfindungsgemässe Modul softwaremässig oder hardwaremässig implementiert wird, ist unwesentlich für die Erfindung.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Ein Blockschältbild zur Erläuterung der Erfindung;
- Fig. 2: eine schematische Darstellung einer bevorzugten Ausführungsform der Erfindung;
- Fig. 3: Beispiele von Kennlinien für verschiedene Abstände D;
- Fig. 4a bis d: Darstellungen der Performance bei unterschiedlichen Typen von Störgeräuschimpulsen;

Grundsätzlich sind in den Figuren gleiche Teile mit gleichen Bezugszeichen versehen.

### Wege zur Ausführung der Erfindung

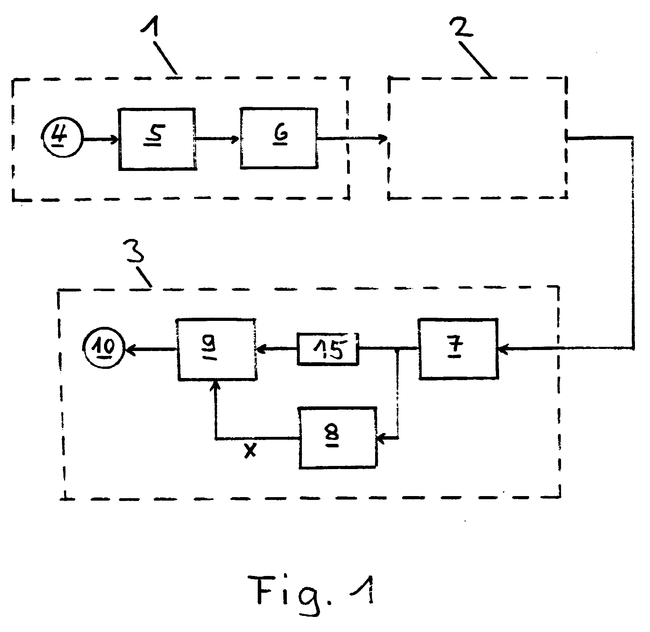

Fig. 1 zeigt ein Übertragungsschema mit FEC Codierung (FEC=Forward Error Correction) zwischen einem Sender 1 und einem Empfänger 3. Die digitalen Daten einer Datenquelle 4 werden in einem Coder 5 nach einem an sich bekannten Verfahren zu Symbolen codiert, zur Ermöglichung einer empfängerseitigen Korrektur von Übertragungsfehlern. Der Modulator 6 führt eine dem Übertragungskanal 2 angemessene Modulation aus.

Der Übertragungskanal 2 wird z.B. durch eine Funkübertragungsstrecke oder durch Leitungen eines elektrischen Stromverteilungsnetzes gebildet. Es wird davon ausgegangen, dass er mit zeitvarianten Störungen (Störimpulsen, Interferenzen, Echos etc.) behaftet ist. Für die weiter unten folgenden Beispiele wird angenommen, dass die kürzesten zu erwartenden Störimpulse eine Länge im Bereich von 1 µs (oder etwas weniger) haben. Bei Abwesenheit von Störimpulsen wird von einem Störgeräuschabstand von mindestens etwa 10 dB ausgegangen.

Im Empfänger 3 wird das Empfangssignal im Demodulator 7 (welcher auch einenEqualizer umfassen kann) demoduliert und im Decoder 9 zur Ermittlung der an die Datensenke 10 abzugebenden Daten decodiert. Beim Decoder 9 handelt es sich um einen nach bekannten Prinzipien arbeitenden soft-decision Decoder. Erfindungswesentlich ist der Signalqualitätsschätzer 8, welcher die Zuverlässigkeit der vom Demodulator 7 geschätzten Symbole ermittelt und einen entsprechenden Zuverlässigkeitswert für die soft-decision Decodierung zur Verfügung stellt.

Fig. 2 zeigt ein Blockschaltbild des Signalqualitätsschätzers 8. Dabei wird vorausgesetzt, dass im Sender 1 Symbole einer fest vorgegebenen Konstellation erzeugt werden. Diese Symbole werden in der Regel nacheinander übertragen, können aber auch gleichzeitig (z.B. mit verschiedenen Frequenzen) übertragen werden. Im Rahmen der nachfolgenden Ausführungen wird von einer zeitlichen Reihenfolge ausgegangen.

Der Störgeräuschprozess (welcher auch auf Interferenzen beruhen kann) kann im Empfänger als zufällig betrachtet werden. Die Störungen werden als gebündelt bzw.impulsartig angenommen (engl. bursty). Damit ist gemeint, dass es eine "gewöhnliche" Störgeräuschleistung (engl. noise power) gibt und dass diese Störgeräuschleistung von Zeit zu Zeit für eine kurze Periode auf einen sehr hohen Wert ansteigt, um nachher auf den "gewöhnlichen" Wert zurückzufallen. Sowohl die Zunahme als auch die Dauer der Erhöhung der Störgeräuschleistung sind zufällig.

Gemäss der Erfindung wird für jedes übertragene Symbol die Störgeräuschleistung ermittelt. Ohne Einschränkung der Allgemeinheit kann angenommen werden, dass die Signalleistung bekannt ist (z.B. aufgrund einer Messung zu Beginn des Empfangs eines Datenblockes). Gesucht ist allerdings nicht die momentane Leistung der Störungen, sondern die Varianz des Störgeräuschprozesses zu einer gegebenen Zeit.

Die Schätzung der Störgeräuschleistung beruht auf einem Block bzw. einem Fenster von N aufeinanderfolgenden Symbolen. Die Länge N des Fensters wird entsprechend dem erwarteten Störgeräuschprozess gewählt. Grössere Fensterlängen führen bei konstanter Signalqualität zu grösserer Genauigkeit, aber zu einer langsameren Reaktion auf Änderungen in der Signalqualität. Bei PLC Anwendungen(PLC = Powerline Communication) mit einer Symbolrate (Symbole pro Sekunde) von z.B. 15 Ms/ s hat sich eine Länge vom N = 15 als vorteilhaft erwiesen. Die kürzesten zu erwartenden Störimpulse liegen nämlich im Bereich von 1 µs. Würde beispielsweise eine Symbolrate von 5 Ms/ s gewählt, wäre eine Länge von N = 5 bis N = 7 vorteilhaft.

Der mit dem Fenster ermittelte Störgeräuschpegel wird für das im Zentrum des Fensters liegende Symbol verwendet. Wenn N ungerade ist, hängt das Ergebnis der Signalqualitätsschätzung von (N-1)/ 2 vorangegangenen und von (N-1)/ 2 nachfolgenden demodulierten Symbolen ab sowie vom Symbol, dessen Qualität es zu schätzen gilt. (Die Länge N kann auch gerade sein; wobei dann aber das Schätzverfahren nicht symmetrisch ist. Für die Performance des erfindungsgemässen Verfahrens hat dies aber keine negativen Auswirkungen.)

Die Erfindung ist primär für Situationen bestimmt, in welchen die Signalleistung im wesentlichen konstant und die Störgeräuschleistung variabel ist. Wenn die Signalleistung ebenfalls zeitvariant ist, aber langsamer als die Störgeräuschleistung variiert, kann die Erfindung ebenfalls eingesetzt werden, wobei aber ein zusätzlicher Rechenaufwand zur Verfolgung der Signalleistung erforderlich ist.

Das in Fig. 2 dargestellte Verfahren zur Bestimmung eines Qualitätswertes kann alsnichtlineares FIR Filter (FIR=Finite Impulse Response) dargestellt werden:

Die geschätzten Symbole si werden in ein Schieberegister mit N Verzögerungsgliedern 11.1 bis 11.N eingegeben. Der Ausgang eines jeden Verzögerungsgliedes 11.1 bis 11.N wird an je einen Rechner 12.1 bis 12.N weitergegeben. Die Rechner 12.1 bis 12.N bestimmen den Abstand des jeweiligen Symbols zum nächsten Konstellationspunkt. Im Falle einer BPSK-Modulation mit den beiden Konstellationspunkten +1 und -1 wird beispielsweise zunächst festgestellt, ob der Betragswert grösser oder kleiner als 0 ist. Im erstgenannten Fall wird der Euklidische Abstand Di zum Konstellationspunkt +1 und im zweitgenannten Fall der entsprechende Abstand zum Konstellationspunkt -1 berechnet.

Im nächsten Schritt wird für jeden Abstand Di in den Vergleichen 13.1 bis 13.N festgestellt, ob der jeweilige Abstand Di kleiner als ein fest vorgegebener Abstand D ist. Fällt der Vergleich positiv aus, d.h. ist der Abstand kleiner, dann wird an Ausgang des jeweiligen Vergleichers 13.1 bis 13.N ein Wert xi = 1 ausgegeben.

Schliesslich berechnen die Addierer 14.1 bis 14.N-1 die Summe aller Werte xi. Aufgrund der obigen Ausführungen ist klar, dass der resultierende Zuverlässigkeitswert x den Wertebereich [0, 1, ..., N] hat.

Der Parameter D wird unter Berücksichtigung des Modulations- und Codierverfahrens und der zu erwartenden Fehlerrate festgelegt. D sollte proportional zur Amplitude des empfangenen Signals definiert werden. Für eine realwertige bipolare Modulation mit Einheitsamplitude (BPSK) und einer Faltungscodierung mit einer Rate 1/2 wird ein Wert D = 0.5 bevorzugt.

Die Berechnung des Qualitätswertes bringt eine Verzögerung von (N-1)/ 2 mit sich. Aus diesem Grund ist im direkten Weg zwischen Demodulator 7 und Decoder 8 ein Verzögerungsglied 15 entsprechender Grösse einzusetzen.

Am Anfang und am Ende des Symbolstroms sind besondere Massnahmen erforderlich. Das erste Symbol beispielsweise hat keine Vorgänger. Werden die fehlenden xi mit Nullen initiiert, dann wird die Qualität der ersten paar Symbole unterbewertet, werden sie dagegen mit dem Wert des ersten Symbols initialisiert, dann wird dieses überbewertet.

Gemäss einer bevorzugten Ausführungsform wird deshalb das Fenster am Anfang und am Ende des Symbolstroms verkürzt, indem beispielsweise beim ersten Symbol nur dieses und die (N+1)/ 2 nachfolgenden Symbole berücksichtigt werden. Beim zweiten bzw. zweitletzten Symbol wird die Qualität beispielsweise auf (N+3)/ 2 Symbolwerte abgestützt (nämlich auf dem ersten bzw. letzten, dem zweiten bzw. zweitletzten und den nachfolgenden (N+1)/ 2 Symbolen). Es ist dabei zu beachten, dass das Ergebnis des Qualitätsschätzers mit einem Faktor A/ N skaliert werden sollte (A bezeichnet die Anzahl gültiger Symbole im Schieberegister (Verzögerungsglieder 11.1 bis 11.N).

Eine andere Möglichkeit besteht darin, alle Ausgangswerte des Qualitätsschätzers 8 zu ignorieren, welche nicht auf N gültigen Symbolen beruhen. Für die ersten bzw. letzten (N+1)/ 2 Symbole gibt es in diesem Fall keine Schätzwerte der Varianz des Störprozesses.

Diese Lücken könnten z.B. durch die Wiederholung des ersten bzw. letzten gültigen Schätzwertes gefüllt werden.

Das allgemeine Blockschaltbild gemäss Fig. 2 kann je nach Umständen vereinfacht werden (z.B. wenn die demodulierten Symbole realwertig und bipolar sind). An dieser Stelle soll aber auf diese Vereinfachungen nicht näher eingegangen werden (weil sie keinen wesentlichen Einfluss auf das Ergebnis haben).

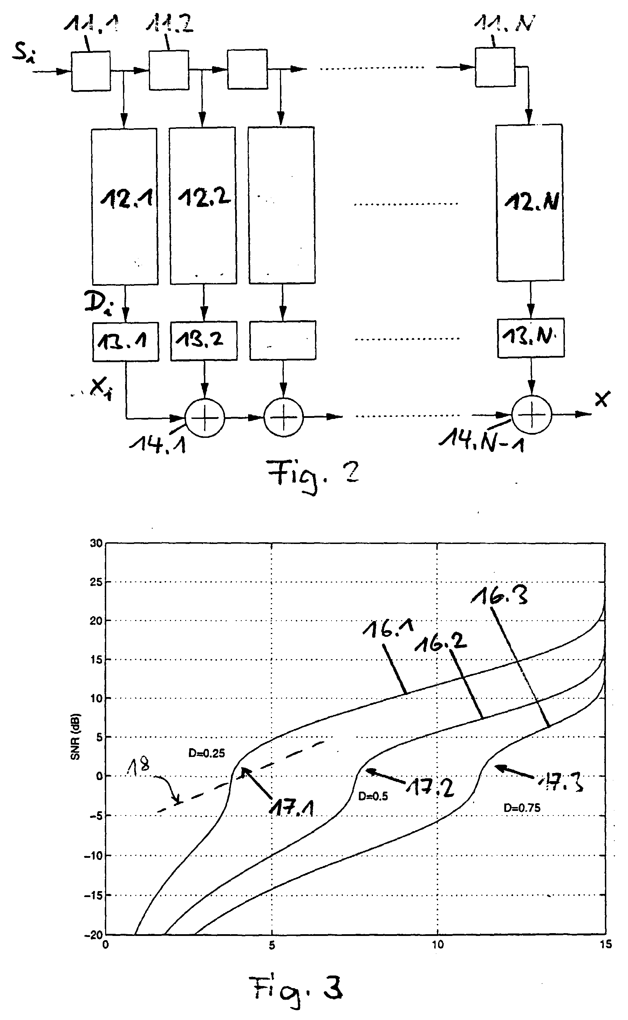

In Fig. 3 sind beispielhaft drei verschiedene erfindungsgemässe Kennlinien (16.1 bis 16.3) dergestellt. Es sei drauf hingewiesen, dass alle drei Kennlinien monoton sind. Auf der Abszisse ist der Ausgabewert des Signalqualitätsschätzers 8 und auf der Ordinate das Verhältnis von Signal zu Rauschen (SNR) aufgetragen. Ausgegangen wird von einer Fensterlänge von N = 15 und von einem BPSK-Verfahren. Die Kennlinien 16.1 bis 16.3 entsprechen verschiedenen vordefinierten Abständen: D = 0.25, D = 0.50, D = 0.75. Jede Kennlinie verfügt über einen erfindungsgemässen Buckel 17.1 bis 17.3, welcher jeweils im Bereich zwischen -5 bis +5 dB SNR liegt. (Der Buckel bzw. die S-Charakteristik führt dazu, dass die Empfindlichkeit des Ausgangssignals in einem gewissen Bereich weniger sensibel auf Änderungen der SNR reagiert, was dazu beiträgt, dass Ungenauigkeiten bei der Messung der Varianz des Störprozesses, d.h. relativ kurze Fensterlängen, nicht kritisch sind.)

Die S-Linien-Charakteristik hat bei einem (bezüglich des Arbeitspunktes) niedrigeren Verhältnis von Signal zu Rauschen eine Überbewertung bezogen auf eine lineare Vergleichslinie (vgl. z.B. gestrichelte Linie 18 zur Kennlinie 16.1) und bei einem höheren Verhältnis von Signal zu Rauschen eine relative Unterbewertung der Signalqualität zur Folge.

Es ist darauf hinzuweisen, dass das erfindungsgemässe Verfahren für Signal/ Rausch-Verhältnisse im Bereich von ca. 5 dB bis 15 dB besonders geeignet ist. Die Kennlinien sollen durch geeignete Wahl des Abstandparameters D so plaziert sein, dass der Buckel im Bereich des kritischen SNR-Wertes liegt (Modulations- und Codierverfahren haben üblicherweise einen kleinen kritischen Bereich der SNR: Oberhalb dieses Bereiches ist die Performance gut, unterhalb dagegen schlecht). Steigt der Störgeräuschpegel kurzfristig stark an, verschiebt sich der "Arbeitspunkt" vorübergehend an die untere Seite bzw. Ranke des Buckels. Unter den Randbedingungen, welche der Fig. 3 zugrunde liegen, ist die Kennlinie 16.2 die am besten geeignete.

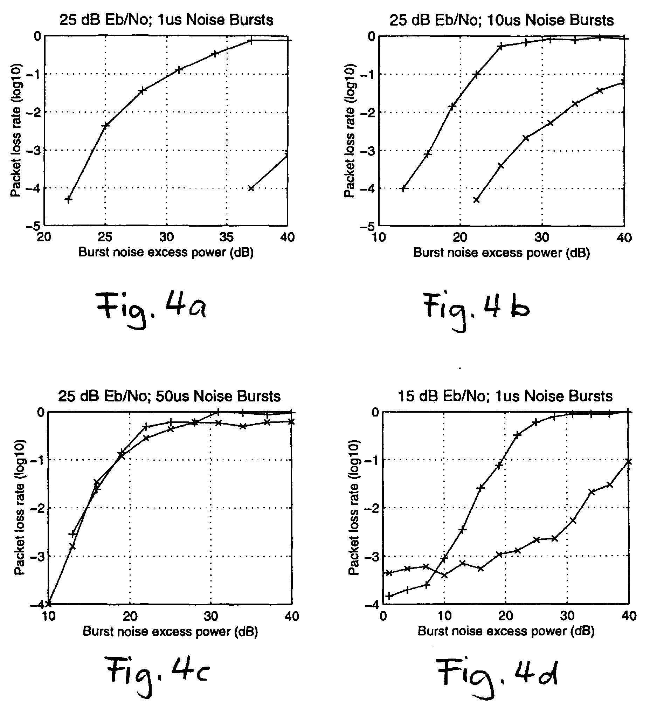

Die Figuren 4a bis 4d zeigen Simulationsergebnisse für eine paketorientierte Datenübertragung mittels BPSK über die elektrischen Versorgungsleitungen. Die Datenrate wurde auf 15 Ms/ s festgelegt. Zur Bekämpfung der Kanalstörungen wurden ein Equalizer und ein Faltungscode (engl. convolutional code) eingesetzt. Die grafischen Darstellungen zeigen die Paket-Fehlerrate in Gegenwart von impulsartigen (bursty) Störgeräuschen. Verglichen wird die Performance mit und ohne die erfindungsgemässe Qualitätsschätzung. Die Länge des Filters betrug N = 15 und der vorgegebene Abstand wurde auf D = 0.5 festgelegt.

In allen Simulationen war das Hintergrundrauschen fixiert ("gewöhnliches" Rauschen), und es wurden Störgeräuschimpulse einer vorgegebenen Länge eingeschossen. Auf der Abszisse ist jeweils das Verhältnis des Pegels der Störimpulse zum Pegel des Hintergrundrauschens in dB angegeben. Auf der Ordinate ist die Rate der verlorenen Pakete aufgetragen. Die mit "+" markierten Linien zeigen die Performance ohne die erfindungsgemässe Qualitätsschätzung, die mit "x" markierten Linien zeigen die Performance unter Anwendung der Erfindung.

In Fig. 4a beträgt die SNR 25 dB und die Störimpulse haben eine Länge von 1 µs. Der Vorteil der Erfindung ist markant: Störimpulse mit Pegeln von über 35dB gegenüber dem Hintergrundrauschen können toleriert werden. Bei Verzicht auf die erfindungsgemässe Qualitätsschätzung kann ein Unterschied von nur 20 dB akzeptiert werden.

Fig. 4b basiert ebenfalls auf einer SNR von 25 dB. Allerdings heben die Störimpulse eine Länge von 10 µs. Die Performance ist mit und ohne Qualitätsschätzung erwartungsgemäss schlechter (insgesamt sind gegenüber Fig. 4a mehr Störungen vorhanden). Trotzdem werden durch die Erfindung 10 dB Gewinn erreicht.

Fig. 4c zeigt eine Situation mit 25 dB SNR und mit Störimpulsen einer Länge von 50 µs. Wiederum ist die gesamte Störgeräuschleistung grösser und die Performance in beiden Fällen schlechter. Die Störimpulse sind so lange, dass die Fehlerkorrektur-Codierung den durch die Störimpulse erzeugten Datenverlust nicht kompensieren kann. In diesem Fall kann durch die Erfindung kein Gewinn erzielt werden.

In Fig. 4d schliesslich wurde eine SNR von 15 dB zugrunde gelegt. Die Störimpulse hatten eine Länge von 1 µs. Wiederum wird mit der erfindungsgemässen Qualitätsschätzung eine bessere Performance erreicht. (Bei sehr kleinen Störimpulsen von 10 dB und weniger wird zwar kein Gewinn erreicht, die gesamte Performance der Datenübertragung ist unter diesen Umständen aber so gut, dass die ersichtliche Differenz keine Rolle spielt.)

Zusammenfassend ist festzustellen, da durch die Erfindung die Performance von bekannten Signalübertragungsverfahren bei Anwesenheit von impulsartigen Störungen auf dem Übertragungskanal verbessert werden kann. Im Prinzip eignet sich die Erfindung für jedes lineare Modulationsverfahren mit FEC, bei welchem die codierten Symbole mit einer diskreten, vorzugsweise kleinen Anzahl von Konstellationspunkten zusammenfallen.

## Patentansprüche

1. Verfahren zum Übertragen von digitalen Daten über einen mit gebündelt auftretenden Störungen behafteten Übertragungskanal (2), wobei in einem Empfänger (3) nach einer Demodulation (7) eine soft-decision Decodierung (9) unter Berücksichtigung einer geschätzten Signalqualität durchgeführt wird, dadurch gekennzeichnet, dass die Signalqualität der nach der Demodulation (7) vorliegenden Symbole mit einer Qualitätsbewertungsschaltung durchgeführt wird, deren Kennlinie (16.1) einen Buckel (17.1) bzw. eine S-Charakteristik aufweist, welcher bei einem tieferen Störgeräuschpegel eine Überbewertung gegenüber einer linearen Kennlinie und bei einem höheren Störgeräuschpegel eine Unterbewertung erzeugt.

2. Verfahren nach Anspruch 1, dadurch gekennzeichnet, dass die Signalqualität auf der Basis der Varianz des Störprozesses innerhalb eines vorgegebenen Fensters von Symbolen geschätzt wird, wobei das Fenster eine Länge (N) im Bereich einer statistisch kürzesten zu erwartenden Störung hat.

3. Verfahren nach Anspruch 2, dadurch gekennzeichnet, dass die Länge (N) des Fensters bei einem durch Stromversorgungsleitungen gebildeten Übertragungskanals im Bereich von weniger als 3 µs gewählt wird.

4. Verfahren insbesondere nach einem der Ansprüche 1 bis 3, dadurch gekennzeichnet, dass zur Bestimmung der Signalqualität für eine vorgegebene Anzahl von empfangenen Symbolen geprüft wird, ob sie innerhalb eines vordefinierten Abstandes (D) zu einem Konstellationspunkt liegen und dass die Anzahl der innerhalb des vordefinierten Abstandes liegenden Symbole als Qualitätswert bei der nachfolgenden Decodierung verwendet wird.

5. Verfahren nach Anspruch 4, dadurch gekennzeichnet, dass der vordefinierte Abstand so gewählt wird, dass bei einem Verhältnis von Signal zu Rauschen von mindestens 5 dB statistisch gesehen die Mehrzahl der Symbole innerhalb des genannten Abstandes zu einem Konstellationspunkt liegen.

6. Verfahren nach einem der Ansprüche 2 bis 5, dadurch gekennzeichnet, dass das Fenster eine Länge von 3 bis 25 Symbolen, insbesondere von etwa 5 bis 15 Symbolen hat.

7. Verfahren nach einem der Ansprüche 1 bis 6, dadurch gekennzeichnet, dass BPSK als Modulationsverfahren und ein vordefinierter Abstand von 0.5 bezogen auf eine Einheitsamplitude gewählt werden.

8. Empfängerschaltkreis zur Durchführung des Verfahrens nach Anspruch 1 mit einem Demodulator (7) und einem soft-decision Decoder (9), gekennzeichnet durch eine Qualitätsbewertungsschaltung (8), deren Kennlinie (16.1) einen Buckel (17.1) aufweist, welcher bei einem tieferen Störgeräuschpegel eine Überbewertung gegenüber einer linearen Kennlinie und bei einem höheren Störgeräuschpegel eine Unterbewertung erzeugt.

9. Empfängerschaltkreis nach Anspruch 8, dadurch gekennzeichnet, dass die Qualitätsbewertungsschaltung (8) Mittel zum Bestimmen des Abstandes (Di) einer vorgegebenen Anzahl von empfangenen Symbolen zum jeweils nächsten Konstellationspunkt, Mittel zum Prüfen, ob der Abstand kleiner als ein vordefinierter Abstand (D) ist, und Mittel zum Bestimmen der Anzahl der innerhalb des genannten Abstandes (D) liegenden Symbole umfasst.

10. Empfängerschaltkreis nach einem der Ansprüche 8 und 9, dadurch gekennzeichnet, dass der Demodulator (7) als BPSK-Demodulator ausgebildet ist.
